(19) Europäisches Patentamt

European Patent Office

Office européen des brevets

(11) Veröffentlichungsnummer: **0 444 523 A2**

(12) **EUROPÄISCHE PATENTANMELDUNG**

(21) Anmeldenummer: **91102498.2**

(22) Anmeldetag: **21.02.91**

(51) Int. Cl.⁵: **B08B 3/02**

(30) Priorität: **28.02.90 DE 4006195**
**03.11.90 DE 4035008**

(43) Veröffentlichungstag der Anmeldung:
**04.09.91 Patentblatt 91/36**

(84) Benannte Vertragsstaaten:
**AT BE CH DE DK ES FR GB GR IT LI LU NL SE**

(71) Anmelder: **SUTTNER GMBH & CO. KG**
**Dunlopstrasse 21**
**W-4800 Bielefeld 11(DE)**

(72) Erfinder: **Hartmann, Lothar**
**Amselweg 3**
**W-4811 Oerlinghausen 3(DE)**

(74) Vertreter: **von Rohr, Hans Wilhelm, Dipl.-Phys.**
**et al**
**Patentanwälte Gesthuysen & von Rohr**
**Huyssenallee 15 Postfach 10 13 33**
**W-4300 Essen 1(DE)**

(54) **Ventilpistole für ein Hochdruckreinigungsgerät sowie Schlauchkupplung, insbesondere für eine solche Ventilpistole.**

㉗ Gegenstand der Erfindung ist eine Ventilpistole für ein Hochdruckreinigungsgerät mit einem aus Kunststoff bestehenden Pistolengehäuse mit einem Handgriffabschnitt, einem Auslaßabschnitt und einem Ventileinsatz (7), mit einem im Handgriffabschnitt angeordneten Druckmittelanschluß (8), einem im Auslaßabschnitt angeordneten Auslaßanschluß und mindestens einem diese Teile verbindenden Leitungsabschnitt (11), wobei der Druckmittelanschluß (8) und/oder der Auslaßanschluß durch ein aufgeweitetes Rohrende (20) des rohrförmigen Leitungsabschnittes (11) und einen dort eingesteckten, gegenüber dem Rohrende (20) abgedichteten Anschlußstutzen (21) gebildet und der Anschlußstutzen (21) im Rohrende (20), vorzugsweise über eine durch eine Öffnung im Pistolengehäuse in seitliche Einsteckschlitze eingesteckte, etwa U-förmige Klammer, arretiert ist. Dabei gilt, daß der Anschlußstutzen (21) zweiteilig ausgeführt sein kann und in seinem oberen Teil (22) als Ventileinsatz (7) mit Ventilsitz (23), Ventilkörper (24) und Ventilfeder (25) ausgebildet sein kann. Ferner gilt, daß der Anschlußstutzen (21) bzw. der untere Teil (26) aus einem Innenteil (28) und einem dazu koaxialen Außenteil (29) bestehen kann, die gegeneinander um eine gemeinsame Längsachse drehbar sind. Schließlich ist Gegenstand der Erfindung auch eine entsprechend konstruierte, von einer Ventilpistole unabhängige. Schlauchkupplung für Hochdruckschläuche.

Fig. 2

Die Erfindung betrifft eine Ventilpistole für ein Hochdruckreinigungsgerät nach dem Oberbegriff von Anspruch 1 bzw. von Anspruch 3 bzw. eine Schlauchkupplung für Hochdruckschläuche, wie sie insbesondere in Verbindung mit einer Ventilpistole für ein Hochdruckreinigungsgerät eingesetzt werden kann, gemäß dem Oberbegriff von Anspruch 8.

Die bekannte Ventilpistole, von der die Erfindung ausgeht (EP-A 0 261 320), ist insgesamt dreiteilig ausgeführt. Den Kern dieser Ventilpistole bildet ein durchgehendes metallisches Winkelrohr, in das ein Ventileinsatz mit allen Bestandteilen des Ventils eingesetzt ist. Das Pistolengehäuse besteht aus wärmeisolierendem Material, insbesondere aus Kunststoff. Zur Bildung des Druckmittelanschlusses ist das im Handgriffabschnitt angeordnete Rohrende des durchgehenden Winkelrohrs auf Teillängen aufgeweitet, so daß sich umlaufende Anlageflächen ergeben, die für verschiedene Zwecke genutzt werden können. Zur Verbindung des Rohrendes mit einem Hochdruckschlauch ist ein mit dem Hochdruckschlauch fest verbundener Anschlußstutzen vorgesehen, der in das aufgeweitete Rohrende eingesteckt und gegenüber diesem abgedichtet ist. Im Rohrende ist dieser Anschlußstutzen durch eine durch eine Öffnung im Pistolengehäuse in seitliche Einsteckschlitze eingesteckte, etwa U-förmige Klammer arretiert. Durch den Anschlußstutzen wird der Ventileinsatz gleichzeitig in axialer Richtung in seiner Position im Rohrende gehalten, das heißt die U-förmige Klammer fixiert Anschlußstutzen und Ventileinsatz gegenüber dem Winkelknick des Winkelrohrs auch in axialer Richtung, jedenfalls im Betrieb, also bei unter hohem Druck stehendem Innenraum des Winkelrohrs.

Bei der bekannten Ventilpistole ist eine Drehung des Hochdruckschlauches gegenüber dem Rohrende des Winkelrohres durch gleitende Drehung des Anschlußstutzens im entsprechend aufgeweiteten Rohrende möglich. Dabei ist Gleitreibung zu überwinden, ein bei Hochdruck nicht eben einfaches Unterfangen. Dabei ist zu bedenken, daß wegen der erforderlichen hydraulischen Abdichtung an sich der Anschlußstutzen an die Innenwandung des Rohrendes fest angepreßt sein muß. Außerdem ist es herstellungstechnisch und bedienungstechnisch problematisch, daß der Ventileinsatz durch den Anschlußstutzen, der ja häufig auch wieder entfernt wird, in seiner Position im Winkelrohr jedenfalls zusätzlich zu fixieren ist.

Der im Auslaßabschnitt der Ventilpistole angeordnete Auslaßanschluß ist ebenfalls als aufgeweitetes Rohrende des Winkelrohrs gebildet, wobei hier eine Bajonettkupplung eingearbeitet ist, an die eine Sprühlanze angeschlossen werden kann.

Die Lehre der Erfindung ist nicht auf eine Ventilpistole der zuvor erläuterten Art, also eine Ventilpistole mit durchgehendem metallischen Winkelrohr beschränkt, sie ist bezogen lediglich auf den Ausgangspunkt einer Ventilpistole mit aufgeweiteten Rohrenden rohrförmiger Leitungsabschnitte.

Weiter ist eine Druckluftpistole bekannt (DD-A 11 491), bei der eine Schlauchkupplung mit verschraubtem Drehflansch zwischen dem Handgriffabschnitt eines Pistolengehäuses und dem mit einem Hochdruckschlauch integrierten Anschlußstutzen angeordnet ist. Der Anschlußstutzen, der normalerweise mit dem Hochdruckschlauch fest verbunden ist und gemeinsam mit dem Hochdruckschlauch von dem Pistolengehäuse abgenommen, nämlich abgeschraubt werden kann, weist im Inneren einen Ventileinsatz mit Ventilsitz, Ventilkörper und Ventilfeder auf. Eine Betätigungsstange für den Ventilkörper durchsetzt koaxial den Strömungskanal für die Druckluft, ist aber selbst im Pistolengehäuse gelagert und geführt und wirkt dort auch mit einem entsprechenden Betätigungs-Handhebel zusammen. Zur Trennung des Hochdruckschlauches mit dem integrierten Anschlußstutzen mit Ventileinsatz vom Pistolengehäuse wird eine Einschraubmutter vom Pistolengehäuse gelöst, wobei dann die Betätigungsstange nach unten aus dem Pistolengehäuse herausragt.

Der Erfindung liegt nun die Aufgabe zugrunde, bei der eingangs erläuterten, bekannten Ventilpistole den Druckmittelanschluß bzw. den Auslaßanschluß zu verbessern sowie eine Schlauchkupplung anzugeben, die eine entsprechend verbesserte Gestaltung aufweist.

Die zuvor aufgezeigte Aufgabe ist in einer ersten Alternative durch die Merkmale des kennzeichnenden Teils von Anspruch 1 gelöst. In dieser Alternative wird der Ventileinsatz in den Anschlußstutzen integriert, der selbst in das Rohrende eingesteckt ist. Wie dabei dann an den Anschlußstutzen ein Hochdruckschlauch angeschlossen ist, bleibt offen, normalerweise wird das mit einer Schraubverbindung geschehen.

In einer zweiten Alternative ist die zuvor aufgezeigte Aufgabe durch die Merkmale des kennzeichnenden Teils von Anspruch 3 gelöst. Diese können auch zusammen mit den Merkmalen des Anspruchs 1 bzw. des Anspruchs 2 verwirklicht sein. Durch diese Konstruktion ist eine Integration des für sich aus dem Stand der Technik bekannten Drehgelenks bzw. der Drehlagerung in den Anschlußstutzen im Rohrende gelungen. Anstelle der für sich aus dem Stand der Technik insoweit bekannten zweiteiligen Konstruktion mit Anschlußstutzen einerseits und axial dahinter angeordneter Drehverbindung andererseits, wird hier eine integrierte Lösung realisiert.

Hinsichtlich einer Schlauchkupplung empfiehlt sich zunächst die Verbindungskonstruktion des Anspruchs 8 , insbesondere dann aber auch die entsprechende zweiteilige Konstruktion, wie sie in Anspruch 9 beschrieben ist.

Vorteilhafte Ausgestaltungen und Weiterbildungen der Ventilpistole einerseits und der Schlauchkupplung andererseits sind Gegenstand der jeweiligen nachgeordneten Ansprüche.

Im folgenden werden bevorzugte Ausgestaltungen der beanspruchten Ventilpistole und der Schlauchkupplung, die insbesondere für einen Einsatz in Verbindung mit einer solchen Ventilpistole geeignet ist, anhand der Zeichnung näher erläutert. In der Zeichnung zeigt

Fig. 1 in einer Seitenansicht ein Pistolengehäuse einer Ventilpistole für ein Hochdruckreinigungsgerät

Fig. 2 bevorzugte Ausgestaltungen des Druckmittelanschlusses einer Ventilpistole gemäß Fig. 1, wobei in dieser Figur links ein Festsitz-Druckmittelanschluß und rechts ein drehbarer Druckmittelanschluß (Swivel) dargestellt ist,

Fig. 3 in einer Fig. 2 entsprechenden Darstellung weitere Ausführungsbeispiele eines Druckmittelanschlusses und

Fig. 4 in einer Fig. 2 entsprechenden Darstellung im Schnitt ein bevorzugtes Ausführungsbeispiel einer Schlauchkupplung der erfindungsgemäßen Art.

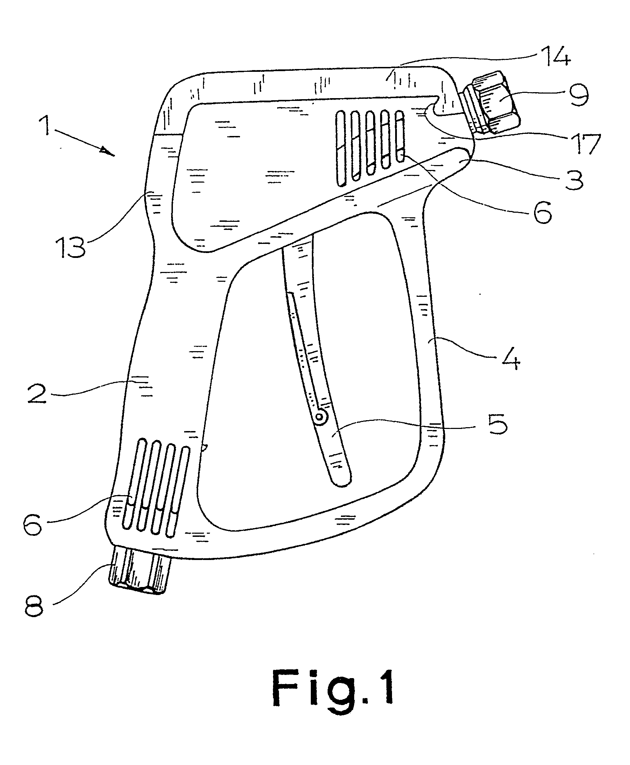

Fig. 1 zeigt nun zunächst ein Ausführungsbeispiel einer Ventilpistole für ein Hochdruckreinigungsgerät od. dgl.. Grundsätzlich ist eine solche Ventilpistole in entsprechend abgeänderter Gestaltung natürlich auch für andere Einsatzbereiche, beispielsweise als Farbspritzpistole, einsetzbar.

Die in Fig. 1 dargestellte Ventilpistole weist zunächst ein aus Kunststoff bestehendes Pistolengehäuse 1 mit einem Handgriffabschnitt 2, einem in einem Winkel, vorzugsweise in einem stumpfen Winkel dazu verlaufenden Auslaßabschnitt 3 und, im hier dargestellten Ausführungsbeispiel, einem vom Auslaßabschnitt 3 zum unteren Ende des Handgriffabschnittes 2 bogenförmig verlaufenden Schutzbügel 4 für einen im Freiraum zwischen dem Schutzbügel 4 und dem übrigen Pistolengehäuse 1 angeordneten Betätigungs-Handhebel 5 auf. Am Handgriffabschnitt 2 und am Auslaßabschnitt 3 des Pistolengehäuses 1 erkennt man an sich bekannte Luftzirkulationsöffnungen 6, durch die Kühlluft durch das Innere des Pistolengehäuses 1 streichen kann, so daß das Pistolengehäuse 1 auch dann nicht übermäßig erwärmt wird, wenn mit einer heißen Reinigungsflüssigkeit oder einem heißen Druckmittel gearbeitet wird.

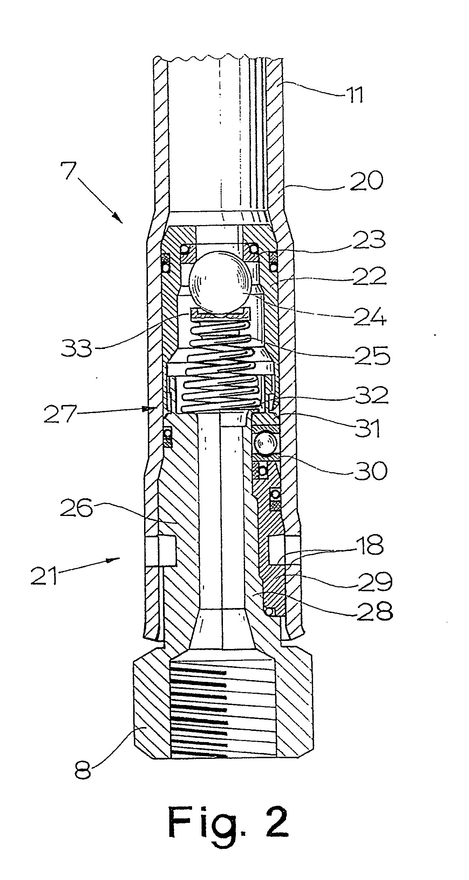

Aus Fig. 2 erkennt man zunächst, daß sich im Inneren des Pistolengehäuses 1 ein Ventileinsatz 7 befindet. Diesem ist ein im Handgriffabschnitt 2 angeordneter Druckmittelanschluß 8 und ein im Auslaßabschnitt 3 angeordneter Auslaßanschluß 9 zugeordnet. Dazwischen befinden sich Leitungsabschnitte 11, ein solcher ist in Fig. 2 angedeutet.

Das Pistolengehäuse 1 besteht in der Darstellung in Fig. 1 aus einem unteren Gehäuseteil 13 und einem oberen Gehäuseteil 14, nahe dem Auslaßanschluß 9 erkennt man kreisbogenförmige Ausformungen 17 zur Bildung einer Hinterschneidung, die ein Abnehmen des Gehäuseteils 14 verhindert.

Fig. 2 zeigt nun zunächst, daß hier der Druckmittelanschluß 8 durch ein aufgeweitetes Rohrende 20 des rohrförmigen Leitungsabschnittes 11 und einen dort eingesteckten, gegenüber dem Rohrende 20 abgedichteten Anschlußstutzen 21 gebildet ist. Der Anschlußstutzen 21 ist im Rohrende 20 arretiert, und zwar nach bevorzugtem Vorschlag über eine durch eine Öffnung im Pistolengehäuse 1 in seitliche Einsteckschlitze 18 eingesteckte, etwa U-förmige Klammer 19, die in Fig. 2 allerdings nicht dargestellt ist. Das ist natürlich eine optimale Anpassung an die Voraussetzungen an entsprechend ausgestalteten Ventilpistolen.

Für den hier erläuterten Anschlußstutzen 21 ist nun wesentlich, daß dieser zweiteilig ausgeführt ist und in seinem oberen Teil 22 als Ventileinsatz 7 mit Ventilsitz 23, Ventilkörper 24 und Ventilfeder 25 ausgebildet ist. Im hier dargestellten Ausführungsbeispiel wird eine konstruktiv besonders einfache Lösung dadurch realisiert, daß der obere Teil 22 mit dem unteren Teil 26 über eine ringförmige, lediglich Zugkräfte, jedoch keine Drehkräfte übertragende Quetschverbindung 27 verbunden ist. Man erkennt in Fig. 2 das eingezogene Ende des oberen Teils 22, das in eine hinterschnittene Ringnut am unteren Teil 26 eingreift und in dieser in der gewünschten Form begrenzt in Längsrichtung verschiebbar ist. Radial besteht insoweit aber "Luft", so daß Drehkräfte nicht übertragen werden.

In der linken Hälfte von Fig. 2 ist der dort dargestellte Anschlußstutzen 21 zweiteilig ausgeführt, während er in der rechten Hälfte von Fig. 2 im Ergebnis dreiteilig ausgeführt ist. Läßt man zunächst einmal die zweiteilige Gestaltung des Anschlußstutzens 21 mit dem Ventileinsatz 7 integriert gedanklich fort, so resultiert auch rechts in Fig. 2 eine zweiteilige Gestaltung des Anschlußstutzens 21 insoweit, als dieser nämlich hier aus einem Innenteil 28 und einem dazu koaxialen Außenteil 29 besteht. Nur der Außenteil 29 ist mit dem Rohrende 20 fest verbunden, der Innenteil 28 hingegen gegenüber dem Außenteil 29 abgedichtet und im Außenteil 29 um die gemeinsame Längsachse drehbar gelagert. Dabei ist die Drehlagerung vorzugsweise als Kugeldrucklager 30 ausgeführt. Während die in Fig. 2 links dargestellte Gestaltung eine Drehung einer an den Druckmittelanschluß 8 angeschlossenen Leitung gegenüber dem Pistolengehäuse 1 nicht erlaubt, erlaubt die in Fig. 2 rechts dargestellte Gestaltung eine freie Drehung, der Anschlußstutzen 21 ist hier also als sogenannter "Swivel" ausgeführt.

Auch die zweiteilige Gestaltung des Anschlußstutzens 21 in der zuvor erläuterten Form ist hier herstellungstechnisch besonders einfach gestaltet, nämlich dadurch, daß der Innenteil 28 einen das Kugeldrucklager 30 auf der vom Außenteil 29 abgewandten Seite überfassenden Flansch 31 aufweist. Hier erkennt man den das Kugeldrucklager 30 überfassenden Flansch 31, der durch formschlüssige Verbindung über einen umgebördelten Rand 32 Teil des Innenteils 28 ist. Um eine Montage nach Herstellung der Verbindung von Innenteil 28 und Außenteil 29 zu ermöglichen, besteht das Kugeldrucklager 30 im hier dargestellten Ausführungsbeispiel aus zwei radial geteilten Lagerhälften, es kann also gewissermaßen kragenartig um den Innenteil 28 herum gelegt werden. Danach kann dann der gesamte Anschlußstutzen 21 in das Rohrende 20 axial eingeschoben und darin mit der Klammer 19 fixiert werden.

Im in Fig. 2 dargestellten Ausführungsbeispiel mit dem in den Anschlußstutzen 21 integrierten Ventilblock gilt dann, wenn der Anschlußstutzen 21 als "Swivel" ausgeführt ist, daß die Drehbewegung des Innenteils 28 möglichst geringe Reibungskräfte am Ventileinsatz 7 hervorrufen sollte. Aufgrund der dargestellten Konstruktion läßt es sich allerdings nicht vermeiden, daß über die Ventilfeder 25 Reibungskräfte auch bis auf den Ventilkörper 24 übertragen werden. Um die übertragenen Reibungskräfte zu minimieren, ist hier vorgesehen, daß die Ventilfeder 25 am Ventilkörper 24 unter Zwischenlage einer Druckplatte 33 zur Anlage kommt und daß die Druckplatte 33 mit dem Ventilkörper 24 eine linienförmige Anlage bildet. Die Linienauflage führt zu den minimalen Reibungskräften.

Eine entsprechende Einstecklösung wie zuvor für den Druckmittelanschluß 8 erläutert läßt sich in gleicher Weise auch für den Auslaßanschluß 9 vorsehen, wobei dann die entsprechenden Ausgestaltungsmöglichkeiten, die zuvor erläutert worden sind, in gleicher Weise gegeben sind. In den Figuren ist zunächst durch Punktierung angedeutet, daß das Kugeldrucklager 30 mit einer Fettdauerfüllung 34 versehen sein kann. Das hat natürlich besondere betriebliche Vorteile hinsichtlich des Verschleißes.

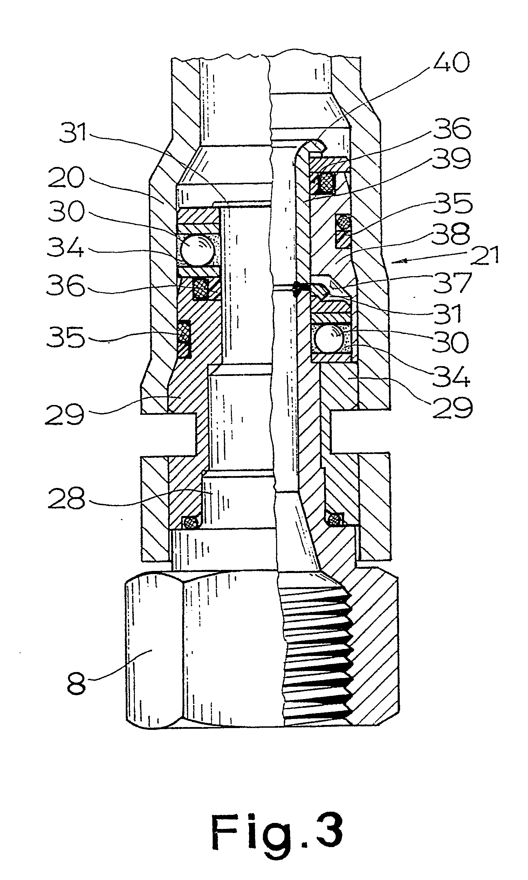

Die Fig. 2 und 3 im linken Teil zeigen ein Ausführungsbeispiel, das dadurch gekennzeichnet ist, daß eine zur Abdichtung des Außenteils 29 gegenüber dem Rohrende 20 dienende Dichtung 35 und/oder eine zur Abdichtung des Außenteils 29 gegenüber dem Innenteil 28 dienende Dichtung 36 vom freien Ende des Innenteils 28 aus gesehen vor der Drehlagerung - Kugeldrucklager 30 - angeordnet ist. Das ist konstruktiv einfach und kostengünstig. Es kann nun aber sein, daß im Betrieb die benutzte Flüssigkeit, die unter hohem Druck den Anschlußstutzen 21 durchströmt, aggressive Bestandteile hat. Das gilt beispielsweise dann, wenn bei einer Hochdruckreinigungseinrichtung mit Chemiezusätzen im Wasser gearbeitet wird. Dann kann es sein, daß die vorteilhafterweise vorhandene Fettdauerfüllung 34 aus dem Kugeldrucklager 30 ausgeschwemmt wird. Um dies zu vermeiden, kann es sich empfehlen, das Kugeldrucklager 30 aus dein Wasserbereich heraus in den Außenbereich zu verlegen. Das ist konstruktiv aufwendiger, hat aber verschleißtechnische Vorteile. Diese Gestaltung ist in Fig. 3 rechts dargestellt. Sie ist dadurch gekennzeichnet, daß eine zur Abdichtung des Außenteils 29 gegenüber dem Rohrende 20 dienende Dichtung 35 und/oder eine zur Abdichtung des Außenteils 29 gegenüber dem Innenteil 28 dienende Dichtung 36 vom freien Ende des Innenteils 28 aus gesehen hinter der Drehlagerung - Kugeldrucklager 30 - angeordnet ist.

Bei der zuletzt erläuterten Konstruktion mit außen liegendem Kugeldrucklager 30 empfiehlt es sich, daß der Außenteil 29 eine nach innen offene, ringförmige Aufnahmeausnehmung 37 aufweist, in der die Drehlagerung - Kugeldrucklager 30 - angeordnet ist und in die, ggf., der Flansch 31 hineinfaßt und daß die Dichtungen 35, 36 in einem jenseits der Aufnahmeausnehmung 37 befindlichen Verlängerungsstück 38 des Außenteils 29 angeordnet sind. Dies zeigt Fig. 3 rechts, wobei erkennbar ist, daß das Verlängerungsstück 38 des Außenteils 29 tatsächlich vom Außenteil 29 selbst getrennt ist. Es könnte aber auch integraler Bestandteil des Außenteils 29 sein, wobei dabei dann die Einbringung der Aufnahmeausnehmung 37, die als Innen-Ausdrehung gestaltet sein müßte, problematisch sein könnte.

Fig. 3 zeigt in der rechten Hälfte, daß die Zweiteiligkeit von Verlängerungsstück 38 und Außenteil 29 ein axiales Zusammenhalten mit Hilfe des Innenteils 28 erfordert. Dazu gilt hier, daß der Innenteil 28 mit einem vorzugsweise angeschweißten oder angelöteten Verlängerungsstück 39 über das Ende des Verlängerungsstückes 38 des Außenteils 29 hinausragt und dort einen weiteren, den Außenteil 29 locker überfassenden Flansch 40 aufweist. Das Verlängerungsstück 39 des Innenteils 28 hat also einerseits in Verbindung mit der Dichtung 36 eine abdichtungstechnische Aufgabe, andererseits aber auch die Aufgabe der Fixierung der Teile gegeneinander in Längsrichtung.

Bei den Dichtungen 35, 36 fällt im übrigen auf, daß es sich hier um kombinierte O-Ring/Gleitring-Dichtungen handelt, wie sie an sich aus dem Stand der Technik bekannt sind. Insbesondere Teflon-Gleitringe schaffen eine leichte Drehbarkeit des Innenteils 28 gegenüber dem Außenteil 29 auch unter sehr hohen Drücken.

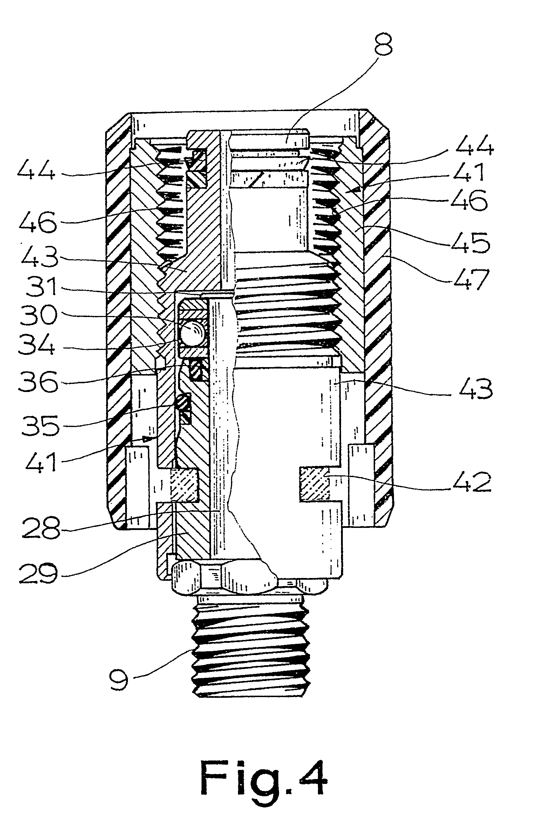

Fig. 4 zeigt nun das gleiche Konzept der Zweiteiligkeit des Anschlußstutzens 21, jedoch bei einer von einer Ventilpistole selbst separierten Schlauchkupplung. Zunächst ist hier dargestellt, daß die Schlauchkupplung einen Druckmittelanschluß 8 und einen Auslaßanschluß 9 sowie eine Außenhülse 41, hier dem Druckmittelanschluß 8 zugeordnet, aufweist. Der Auslaßanschluß 9 ist hier vom Anschlußstutzen 21 gebildet. Dieser ist in die Außenhülse 41 eingesteckt und dagegen abgedichtet, und zwar mittels der Dichtung 35. Dieses Konzept entspricht an sich Fig. 2 und der in Fig. 3 links gezeigten Darstellung.

Hier gilt nun zunächst, daß der Anschlußstutzen 21 in der Außenhülse 41, vorzugsweise über eine in seitliche Einsteckschlitze 18 eingesteckte, etwa U-förmige Klammer 42, arretiert ist.

Weiter ist hier dargestellt, daß die Außenhülse 41 zweiteilig ausgebildet ist, nämlich einen Innen-Steckteil 43 mit Außendichtung 44 und einen Außen-Hülsenteil 45 mit Innengewinde 46 aufweist. Man erkennt in Fig. 4, daß man von oben her einen Hochdruckschlauch hier einschrauben kann, wenn er beispielsweise am Ende mit einem Außengewinde versehen ist. Entsprechend befindet sich am Innen-Steckteil 43 die Außendichtung 44 mit Dichtungsring und Backupring. Natürlich sind hier auch andere Konstruktionsvarianten denkbar.

Um die erfindungsgemäße Schlauchkupplung für sich auch handhaben zu können, und zwar auch dann, wenn mit Heißwasser gearbeitet wird, empfiehlt es sich, daß auf die Außenhülse 41, insbesondere auf den Außen-Hülsenteil 45, eine insbesondere aus Kunststoff bestehende Griffhülse 47 aufgesteckt und mit der Außenhülse 41, vorzugsweise sowohl mit dem Innen-Steckteil 43 als auch mit dem Außen-Hülsenteil 45, verbunden ist. Im dargestellten Ausführungsbeispiel ist das nicht weiter spezifiziert, man kann sich aber vorstellen, daß hier übliche Blockierschrauben od. dgl. eingesetzt werden.

Von besonderem Vorteil ist es nun, wenn man die Schlauchkupplung so konstruiert, wie das zuvor für einen Einsteck-Anschluß einer Ventilpistole schon erläutert worden ist. Es gilt dann nämlich, daß der Anschlußstutzen 21 aus einem Innenteil 28 und einem dazu koaxialen Außenteil 29 besteht und dabei nur der Außenteil 29 mit der Außenhülse 41 fest verbunden ist, daß der Innenteil 28 gegenüber dem Außenteil 29 abgedichtet und im Außenteil 29 um die gemeinsame Längsachse drehbar gelagert ist.

Auf der Grundlage der hier angesprochenen, in Fig. 4 dargestellten zweiteiligen Ausführung des Anschlußstutzens 21 ergeben sich hier im Grundsatz die gleichen vorteilhaften Ausgestaltungsmöglichkeiten, die in Verbindung mit der Ventilpistole und bezugnehmend auf die Fig. 2 und 3 der Zeichnung oben im einzelnen erläutert worden sind. Zur Vermeidung von Wiederholungen darf daher auf die voranstehenden Ausführungen sowie auf die Ansprüche 17 bis 24 verwiesen werden.

Das in Fig. 4 dargestellte Ausführungsbeispiel zeigt im übrigen den Auslaßanschluß 9 mit einem Außen-Schraubgewinde versehen, man könnte diesen beispielsweise in ein entsprechendes Gegengewinde am Handgriff einer Ventilpistole einschrauben. Es ließe sich aber hier auch ein anderer Hochdruckschlauch mit einem entsprechenden Überwurf-Teil aufschrauben.

Fig. 4 läßt schließlich noch erkennen, daß die Griffhülse 47 am unteren Ende spezielle Ausnehmungen zur Aufnahme der zur Arretierung der Teile gegeneinander dienenden Klammer 42 aufweist. Die Griffhülse 47 deckt im übrigen die Klammer 42 nach außen hin ab, so daß sie nicht versehentlich herausrutschen kann.

**Patentansprüche**

1. Ventilpistole für ein Hochdruckreinigungsgerät, mit einem aus Kunststoff bestehenden Pistolengehäuse (1) mit einem Handgriffabschnitt (2), einem Auslaßabschnitt (3) und einem Ventileinsatz (7), mit einem im Handgriffabschnitt (2) angeordneten Druckmittelanschluß (8), einem im Auslaßabschnitt (3) angeordneten Auslaßanschluß (9) und mindestens einem diese Teile verbindenden Leitungsabschnitt (11), wobei der Druckmittelanschluß (8) und/oder der Auslaßanschluß (9) durch ein aufgeweitetes Rohrende (20) des rohrförmigen Leitungsabschnittes (11) und einen dort eingesteckten, gegenüber dem Rohrende (20) abgedichteten Anschlußstutzen (21) gebildet und der Anschlußstutzen (21) im Rohrende (20), vorzugsweise über eine durch eine Öffnung im Pistolengehäuse (1) in seitliche Einsteckschlitze (18) eingesteckte, etwa U-förmige Klammer, arretiert ist, **dadurch gekennzeichnet,** daß der Anschlußstutzen (21) zweiteilig ausgeführt ist und in seinem oberen Teil (22) als Ventileinsatz (7) mit Ventilsitz (23), Ventilkörper (24) und Ventilfeder (25) ausgebildet ist.

2. Ventilpistole nach Anspruch 1, dadurch gekennzeichnet, daß der obere Teil (22) mit dem unteren Teil (26) über eine ringförmige, nur Zugkräfte, aber keine Drehkräfte übertragende Quetschverbindung (27) verbunden ist.

3. Ventilpistole für ein Hochdruckreinigungsgerät, mit einem aus Kunststoff bestehenden Pistolengehäuse (1) mit einem Handgriffabschnitt (2), einem Auslaßabschnitt (3) und einem Ventileinsatz (7), mit einem im Handgriffabschnitt (2) angeordneten Druckmittelanschluß (8), einem im Auslaßabschnitt (3) angeordneten Auslaßanschluß (9) und mindestens einem diese Teile verbindenden Leitungsabschnitt (11), wobei der Druckmittelanschluß (8) und/oder der Auslaßanschluß (9) durch ein aufgeweitetes Rohrende (20) des rohrförmigen Leitungsabschnittes (11) und einen dort eingesteckten, gegenüber dem Rohrende (20) abgedichteten Anschlußstutzen (21) gebildet und der Anschlußstutzen (21) im Rohrende (20), vorzugsweise über eine durch eine Öffnung im Pistolengehäuse (1) in seitliche Einsteckschlitze (18) eingesteckte, etwa U-förmige Klammer, arretiert ist, ggf. nach Anspruch 1 oder 2, **dadurch gekennzeichnet,** daß der Anschlußstutzen (21) bzw. bei zweiteiliger Ausführung der untere Teil (26) des Anschlußstutzens (21) aus einem Innenteil (28) und einem dazu koaxialen Außenteil (29) besteht und dabei nur der Außenteil (29) mit dem Rohrende (20) fest verbunden ist, daß der Innenteil (28) gegenüber dem Außenteil (29) abgedichtet und im Außenteil (29) um die gemeinsame Längsachse drehbar gelagert ist.

4. Ventilpistole nach Anspruch 3, dadurch gekennzeichnet, daß die Drehlagerung des Innenteils (28) im Außenteil (29) als Kugeldrucklager (30) ausgeführt ist und, vorzugsweise, daß das Kugeldrucklager (30) aus zwei radial geteilten Lagerhälften besteht.

5. Ventilpistole nach Anspruch 3 oder 4, dadurch gekennzeichnet, daß der Innenteil (28) einen die Drehlagerung, insbesondere das Kugeldrucklager (30), auf der vom Außenteil (29) abgewandten Seite überfassenden Flansch (31) aufweist, und/oder daß die Ventilfeder (25) am Ventilkörper (24) unter Zwischenlage einer Druckplatte (33) zur Anlage kommt und daß die Druckplatte (33) mit dem Ventilkörper (24) eine linienförmige Anlage bildet, und/oder daß das Kugeldrucklager (30) mit einer Fettdauerfüllung (34) versehen ist.

6. Ventilpistole nach einem der Ansprüche 3 bis 5, dadurch gekennzeichnet, daß eine zur Abdichtung des Außenteils (29) gegenüber dem Rohrende (20) dienende Dichtung (35) und/oder eine zur Abdichtung des Außenteils (29) gegenüber dem Innenteil (28) dienende Dichtung (36) vom freien Ende des Innenteils (28) aus gesehen vor der Drehlagerung - Kugeldrucklager (30) - angeordnet ist.

7. Ventilpistole nach einem der Ansprüche 3 bis 5, dadurch gekennzeichnet, daß eine zur Abdichtung des Außenteils (29) gegenüber dem Rohrende (20) dienende Dichtung (35) und/oder eine zur Abdichtung des Außenteils (29) gegenüber dem Innenteil (28) dienende Dichtung (36) vom freien Ende des Innenteils (28) aus gesehen hinter der Drehlagerung - Kugeldrucklager (30) - angeordnet ist, vorzugsweise, daß der Außenteil (29) eine nach innen offene, ringförmige Aufnahmeausnehmung (37) aufweist, in der die Drehlagerung - Kugeldrucklager (30) - angeordnet ist und in die, ggf., der Flansch (31) hineinfaßt und daß die Dichtungen (35, 36) in einem jenseits der Aufnahmeausnehmung (37) befindlichen Verlängerungsstück (38) des Außenteils (29) angeordnet sind, und, vorzugsweise, daß der Innenteil (28) mit einem Verlängerungsstück (39) über das Ende des Verlängerungsstückes (38) des Außenteils (29) hinausragt und dort einen weiteren, den Außenteil (29) locker überfassenden Flansch (40) aufweist.

8. Schlauchkupplung für Hochdruckschläuche, insbesondere für eine Ventilpistole für ein Hochdruckreinigungsgerät, mit einem Druckmittelanschluß (8) und einem Auslaßanschluß (9), mit einer den Druckmittelanschluß (8) oder den Auslaßanschluß (9) bildenden Außenhülse (41) und mit einem den Auslaßanschluß (9) oder den Druckmittelanschluß (8) bildenden Anschlußstutzen (21), wobei der Anschlußstutzen (21) in die Außenhülse (41) eingesteckt und dagegen abgedichtet ist, **dadurch gekennzeichnet,** daß der Anschlußstutzen (21) in der Außenhülse (41), vorzugsweise über eine in seitliche Einsteckschlitze (18) eingesteckte, etwa U-förmige Klammer (42), arretiert ist.

9. Schlauchkupplung nach Anspruch 8, dadurch gekennzeichnet, daß die Außenhülse (41) zweiteilig ausgebildet ist, nämlich einen Innen-Steckteil (43) mit Außendichtung (44) und einen Außen-Hülsenteil (45) mit Innengewinde (46) aufweist, und/oder daß auf die Außenhülse (41), insbesondere auf den Außen-Hülsenteil (45), eine insbesondere aus Kunststoff bestehende Griffhülse (47) aufgesteckt und mit der Außenhülse (41), vorzugsweise sowohl mit dem Innen-Steckteil (43) als auch mit dem Außen-Hülsenteil (45), verbunden ist, und/oder daß der Anschlußstutzen (21) aus einem Innenteil (28) und einem dazu koaxialen Außenteil (29) besteht und dabei nur der Außenteil (29) mit der Außenhülse (41) fest verbunden ist, daß der Innenteil (28) gegenüber dem Außenteil (29) abgedichtet und im Außenteil (29) um die gemeinsame Längsachse drehbar gelagert ist.

10. Schlauchkupplung nach Anspruch 9, dadurch gekennzeichnet, daß die Drehlagerung des Innenteils (28) im Außenteil (29) als Kugeldrucklager (30) ausgeführt ist und, vorzugsweise, daß das Kugeldrucklager (30) aus zwei radial geteilten Lagerhälften besteht.

11. Schlauchkupplung nach Anspruch 9 oder 10, dadurch gekennzeichnet, daß der Innenteil (28) einen die Drehlagerung, insbesondere das Kugeldrucklager (30), auf der vom Außenteil (29) abgewandten Seite überfassenden Flansch (31) aufweist, und/oder daß das Kugeldrucklager (30) mit einer Fettdauerfüllung (34) versehen ist.

12. Schlauchkupplung nach einem der Ansprüche 9 bis 11, dadurch gekennzeichnet, daß eine zur Abdichtung des Außenteils (29) gegenüber der Außenhülse (41) dienende Dichtung (35) und/oder eine zur Abdichtung des Außenteils (29) gegenüber dem Innenteil (28) dienende Dichtung (36) vom freien Ende des Innenteils (28) aus gesehen vor der Drehlagerung - Kugeldrucklager (30) - angeordnet ist.

13. Schlauchkupplung nach einem der Ansprüche 9 bis 11, dadurch gekennzeichnet, daß eine zur Abdichtung des Außenteils (29) gegenüber der Außenhülse (41) dienende Dichtung (35) und/oder eine zur Abdichtung des Außenteils (29) gegenüber dem Innenteil (28) dienende Dichtung (36) vom freien Ende des Innenteils (28) aus gesehen hinter der Drehlagerung - Kugeldrucklager (30) - angeordnet ist, vorzugsweise, daß der Außenteil (29) eine nach innen offene, ringförmige Aufnahmeausnehmung (37) aufweist, in der die Drehlagerung - Kugeldrucklager (30) - angeordnet ist und in die, ggf., der Flansch (31) hineinfaßt und daß die Dichtungen (35, 36) in einem jenseits der Aufnahmeausnehmung (37) befindlichen Verlängerungsstück (38) des Außenteils (29) angeordnet sind, und, vorzugsweise, daß der Innenteil (28) mit einem vorzugsweise angeschweißten oder angelöteten Verlängerungsstück (39) über das Ende des Verlängerungsstückes (38) des Außenteils (29) hinausragt und dort einen weiteren, den Außenteil (29) locker überfassenden Flansch (31) aufweist.

# Fig.1

**Fig. 2**

**Fig.3**

Fig.4